# EUROPÄISCHE PATENTSCHRIFT

(11) **EP 0 870 614 B1**
(45) Veröffentlichungstag und Bekanntmachung des Hinweises auf die Patenterteilung: **04.10.2001**
(21) Anmeldenummer: 98106474.4
(22) Anmeldetag: 08.04.1998
(51) Int. Cl.: B41F 33/00, B41N 1/10

(54) **Beschichtete Walze mit dauerhafter Kennung und Verfahren zur Durchführung der Kennung**
Coated roll with durable identification and method for carrying out the identification
Rouleau revêtu avec identification durable et méthode pour la réalisation d'identification

(30) Priorität: 11.04.1997 DE 19715085
(43) Veröffentlichungstag der Anmeldung: 14.10.1998
(73) Patentinhaber: Thyssen Krupp Stahl AG, 40211 Düsseldorf (DE)
(72) Erfinder: Schlömer, Gert-Peter, 51371 Leverkusen (DE); Schwister, Ralf, 50129 Bergheim (DE)

(56) Entgegenhaltungen:
- EP-A- 0 581 056

## Beschreibung

Gegenstand der vorliegenden Erfindung ist eine beschichtete Walze mit dauerhafter Kennung sowie ein Verfahren zur dauerhaften Kennung und Dokumentation des Lebenslaufes von beschichteten Walzen.

Beschichtete Walzen bestehen im allgemeinen aus einem Walzenkern aus Metall und einer Beschichtung aus Elastomeren oder Kunststoffen. Diese Beschichtung hat im allgemeinen nur eine begrenzte Lebensdauer, so daß von Zeit zu Zeit die Beschichtung entfernt wird und eine neue Beschichtung aufgebracht wird. Im Laufe des Lebens eines Walzenkernes kann dieser somit mehrfach beschichtet werden.

Es ist zwar möglich, diese Beschichtung zu kennzeichnen, jedoch ermöglicht dies nicht ohne weiteres, den Lebenslauf des Walzenkernes zu verfolgen und damit auch nachträglich festzustellen, wann und durch wen neue Beschichtungen aufgetragen worden sind. In Großdruckereien werden obendrein einige Walzen mit Gummitüchern überzogen, so daß die Beschichtung nicht einmal fest mit dem Walzenkern verbunden ist.

Aus der EP-A-0 581 056 ist eine Vorrichtung zur Identifizierung eines Walzenmantels bekannt, der aus einem flexiblen Material gefertigt ist und in Druckmaschinen zum Einsatz kommt und wobei die Vorrichtung zur Identifizierung aus einem Mikrochip und einer Abtasteinrichtung besteht, wobei der Mikrochip in den Walzenmantel eingearbeitet ist und die Abtasteinrichtung den Mikrochip zum Aussenden von Signalen anregt, wobei die Signale eine eindeutige Identifizierung des Mikrochips und damit des Walzenmantels erlauben.

Es ist technisch schwierig durchzuführen, einen Mikrochip in den Walzenmantel einzubauen und das obendrein an einer Stelle, an der die Beschichtung nicht zum Einsatz kommt, da anderenfalls der eingebaute Mikrochip zu einer Veränderung der Elastizität und damit der Druckeigenschaften der Walzenbeschichtung führt.

Weiterhin gestattet diese Vorrichtung zur Identifizierung des Walzenmantels nur dessen Identifizierung, nicht jedoch die Dokumentation des Lebenslaufes des Walzenkernes.

Die Erfindung hat sich somit die Aufgabe gestellt, beschichtete Walzen mit dauerhafter Kennung zur Verfügung zu stellen sowie ein Verfahren zur dauerhaften Kennung und Dokumentation des Lebenslaufes von beschichteten Walzen.

Diese Aufgabe wird dadurch gelöst, daß an oder in dem Walzenkern ein von außen anregbarer Mikrosender mit mehrstelliger alphanumerischer Kodierung befestigt ist und dieser Mikrosender nicht zerstörungsfrei entfernbar ist. Der Mikrosender soll dabei gegen Temperaturen mindestens bis 180°C und gegen Chemikalien beständig sein, insbesondere gegen die Chemikalien, die mit den beschichteten Walzen in Kontakt kommen. Dies sind außer Druckerfarben vor allem organische Lösungsmittel wie Alkohole, Kohlenwasserstoffe aber auch Säuren bis zu 10 % Säuregehalt.

Die erfindungsgemäß verwendeten Mikrosender befinden sich deshalb vorzugsweise in einem kleinen Glasröhrchen. Dieses Glasröhrchen wird dadurch an oder in dem Walzenkern befestigt, indem es aufgeklebt wird mit einem entsprechend beständigen Kleber. Vorzugsweise wird dieser Mikrosender in dem Walzenkern befestigt, indem eine entsprechend große Vertiefung in den Walzenkern eingeschnitten wird, in der der Mikrosender eingebaut wird. Dabei kann es vorteilhaft sein, den Mikrosender bereits mit einem entsprechenden Kunststoff zu umgeben, der beispielsweise die Form einer Tablette aufweist. Aus fertigungstechnischen Gründen weist diese Tablette im allgemeinen parallel zum Glasröhrchen eine Einkerbung auf.

Als Klebstoff kommen insbesondere Zweikomponentenkleber in Frage, die nach dem Aushärten unempfindlich sind gegen Temperaturen bis 180°C sowie die oben erwähnten Chemikalien. Geeignet sind auch durch Erhitzung oder Vulkanisation nachträglich gehärtete Einkomponentenkleber oder Zweikomponentenkleber, bei denen eine der beiden Reaktionskomponenten gekappt ist und deshalb erst bei höheren Temperaturen zur Vernetzung mit der anderen Komponente führt. ABS ist beispielsweise ein bewährtes Material bezüglich der Temperaturbeständigkeit und Chemikalienbeständigkeit.

Um zu gewährleisten, daß der Mikrosender nicht zerstörungsfrei entfernt oder ausgetauscht werden kann, empfiehlt es sich, die Vertiefung in dem Walzenkern zumindest teilweise zu unterschneiden, da dies dann zusammen mit dem Kleber zu einer festen Verankerung mit dem Walzenkern führt. Da nach Einführung des Mikrosenders in die Vertiefung das Klebe- oder Kunststoffmaterial in die gleiche Form gebracht werden kann wie die umliegende Oberfläche des Walzenkernes, kann ein derartiger Walzenkern problemlos mit einem elastomeren Material beschichtet und vulkanisiert werden. Selbstverständlich können auf einen derartigen Walzenkern auch Walzentücher aufgezogen werden.

Da der Mikrosender kontaktlos und aus einem gewissen Abstand heraus angeregt werden kann und seine mehrstellige alphanumerische Kodierung wieder aussendet, ist es leicht möglich, zerstörungsfrei und schnell eine Walze mit und ohne Beschichtung zu identifizieren. Die ausgesendete Information kann dann entsprechend dokumentiert werden, so daß sich genau rückverfolgen läßt, wann und womit der Walzenkern neu beschichtet wurde und an wen die neubeschichtete Walze ausgeliefert wurde. Es ist somit möglich, den Lebenslauf der beschichteten Walze zu erfassen und rückzuverfolgen, zumindest wenn er zur Neubeschichtung ins Werk gelangt und das Werk wieder verläßt. Darüber hinaus ist es auch möglich, vor Ort der Benutzung rasch festzustellen, um welche Walze es sich handelt und wann sie das letzte Mal das Werk verlassen hat.

Die meisten Mikrosender werden zur Verfügung gestellt mit dem Qualitätsmerkmal, bis 80°C temperaturbeständig zu sein. Es gibt aber in Glasröhrchen eingeschmolzene Mikrosender, die ohne weiteres 180°C mehrere Stunden aushalten, so daß sie die Aufvulkanisation einer neuen Beschichtung auf dem Walzenkern ohne weiteres überstehen.

Die Einbettung in einem Kunststoff und die Verklebung mit dem Walzenkern gewährleistet darüber hinaus, daß nachträgliche Veränderungen oder Verfälschungen der alphanumerischen Kodierung ausgeschlossen werden können.

Aus all diesen ergibt sich somit, daß es wesentlich vorteilhafter und einfacher ist, beschichtete Walzen mit einer dauerhaften Kennung zu versehen, indem man den Walzenkern mit einem von außen anregbaren Mikrosender verbindet als wenn nur ein Mikrochip in den Walzenmantel eingearbeitet wird.

## Patentansprüche

1. Beschichtete Walze mit dauerhafter Kennung, **dadurch gekennzeichnet, daß** an oder in ihrem Walzenkern ein von außen anregbarer Mikrosender mit mehrstelliger alphanumerischer Kodierung befestigt ist und dieser Mikrosender nicht zerstörungsfrei entfernbar ist.

2. Walze gemäß Anspruch 1, **dadurch gekennzeichnet, daß** der Mikrosender gegen Temperaturen mindestens bis 180°C und gegen Chemikalien beständig ist.

3. Verfahren zur dauerhaften Kennung und Dokumentation des Lebenslaufes von beschichteten Walzen, **dadurch gekennzeichnet, daß** an oder in dem Walzenkern ein von außen anregbarer Mikrosender mit mehrstelliger alphanumerischer Kodierung so befestigt ist, **daß** er nicht zerstörungsfrei entfernt werden kann.

4. Verfahren gemäß Anspruch 3, **dadurch gekennzeichnet, daß**. der Mikrosender gegen Temperaturen mindestens bis 180°C und gegen Chemikalien beständig ist.

## Claims

1. Coated roller with permanent identification, **characterised in that** an externally-excitable micro-transmitter with multi-digit alphanumeric encoding is attached on or in its roller core and this micro-transmitter cannot be removed without being destroyed.

2. Roller according to claim 1, **characterised in that** the micro-transmitter is resistant to temperatures of at least up to 180°C and to chemicals.

3. Method for permanent identification and documentation of the service life of coated rollers, **characterised in that** an externally-excitable micro-transmitter with multi-digit alphanumeric encoding is attached on or in the roller core in such a way that it cannot be removed without being destroyed.

4. Method according to claim 3, **characterised in that** the micro-transmitter is resistant to temperatures of at least up to 180°C and to chemicals.

## Revendications

1. Cylindre revêtu doté d'une identification durable, **caractérisé en ce que**, sur ou dans son noyau est fixé un micro-émetteur apte à être excité de l'extérieur et comportant un codage alphanumérique à plusieurs positions, ce micro-émetteur ne pouvant être enlevé sans destruction.

2. Cylindre selon la revendication 1, **caractérisé en ce que** le micro-émetteur résiste à des températures allant jusqu'au moins 180°C, et aux produits chimiques.

3. Procédé pour l'identification durable et la documentation de la durée de vie de cylindres revêtus, **caractérisé en ce que**, sur ou dans son noyau est fixé un micro-émetteur apte à être excité de l'extérieur et comportant un codage alphanumérique à plusieurs positions, ce micro-émetteur ne pouvant être enlevé sans destruction.

4. Cylindre selon la revendication 3, **caractérisé en ce que** le micro-émetteur résiste à des températures allant jusqu'au moins 180°C, et aux produits chimiques.
